# EUROPEAN PATENT SPECIFICATION

(11) **EP 2 795 158 B1**
(45) Date of publication and mention of the grant of the patent: **23.05.2018**
(21) Application number: 12798751.9
(22) Date of filing: 11.12.2012
(51) Int. Cl.: F16H 7/08, F16H 7/18

(54) **SLIDING ELEMENT FOR USE IN AN ENGINE OR CHAIN TRANSMISSION APPARATUS**
SCHIEBEELEMENT ZUR VERWENDUNG IN EINER MOTOR- ODER KETTENANTRIEBSVORRICHTUNG
ÉLÉMENT COULISSANT POUR UNE UTILISATION DANS UN APPAREIL À TRANSMISSION PAR CHAÎNE OU PAR MOTEUR

(30) Priority: 21.12.2011 EP 11194741
(43) Date of publication of application: 29.10.2014
(73) Proprietor: DSM IP Assets B.V., 6411 TE Heerlen (NL)
(72) Inventor: WANG, Zhujuan, NL-6100 AA Echt (NL); MEUWISSEN, Michael Hubertus Helena, NL-6100 AA Echt (NL); PROOST, Roy Antoine Hendrikus Wilhelmus, NL-6100 AA Echt (NL)
(74) Representative: DSM Intellectual Property
(86) International application number: PCT/EP2012/075085
(87) International publication number: WO 2013/092307

(56) References cited:
- WO-A2-2007/130979
- WO-A2-2009/043850
- DE-A1- 19 709 476
- GB-A- 2 356 234
- JP-A- 2005 112 871
- US-A1- 2002 054 995
- US-A1- 2007 158 618
- US-A1- 2008 020 193

## Description

The invention relates to a sliding element for use in a sliding system, more particular a chain transmission apparatus, such as a power train drive system comprising an engine, a transmission differential and a drive shaft system. In particular the engine is an internal combustion engine comprising a lubricated chain driven system. In such systems the sliding element is in sliding contact with the lubricated chain during practical use of the engine. These sliding components are in particular chain guides and chain tensioners. The invention also relates to an engine comprising two elements engaged in sliding contact with each other. Sliding elements herein can be for example gears and parts of bearings. The invention in particular relates to a chain transmission apparatus, comprising a chain, and a sliding element engaged in sliding contact with the chain under lubricated sliding conditions.

Sliding components for a chain sliding system are described in the following patents or patent applications. JP2005-112871 is considered as the closest prior art for independent claims 1, 9 and 11. US2002004433A describes a chain guide member used in a chain transmission apparatus. The chain guide member has a sliding contact section extending along a travelling surface of a chain and coming into sliding contact with the chain, and a reinforcement main body reinforcing and supporting the sliding contact section along the travelling surface of the chain. A part or all of a joint portion between the sliding contact section and the reinforcement main body is joined by melting.

US6524202B describes a tensioner for use on the timing chain of a motor vehicle engine. The tensioner is referred to as a blade-type tensioner and has a blade spring element mechanically interlocked with a plastic shoe. The shoe may be of rigid filled nylon and engages the chain to be tensioned. The spring element is interlocked to the plastic shoe by having ends inserted into grooves formed in the opposite ends of the shoe. The shoe has a metal bushing fixed in one end. The shoe is rotatably attached to a metal pin inserted through the bushing, the pin being fixed to a base.

FR2736123A describes a guide rail consisting of a main body and an anti-friction coating which are moulded together by a bi-component injection process so that once they have set they are fixed together. The material which forms the body is injected into the mould first, followed immediately afterwards by the coating material. The material forming the body is a plastic with reinforcing additives, for example, a polyamide reinforced with glass fibres, while the outer coating is another plastic which is resistant to abrasion.

Nowadays there is a big concern with the energy consumption, and in particular with the CO₂ emissions, of personal cars and other means of transport. Improvement in fuel economy or fuel consumption is required in internal combustion engines form the viewpoint of environmental protection. To enforce lower CO₂ emissions, governments have installed penalties, or tend to do so, for excessive CO₂ emissions. In the European community, limits are set on 130 g CO₂/ km, as a typical number for a standard vehicle with a weight of 1300 kg, and will go further down from 2012 onwards. Therefore, and in particular for reasons of a more sustainable environment, there is a need for more efficient cars, and more efficient engines for use in such cars and other transport vehicles.

One of the main causes for automotive vehicles consuming much energy is energy loss due to friction. One important area of friction is in engines comprising a chain driven system, wherein components comprising a sliding element are in sliding contact with the chain during practical use of the engine.

In recent years, there has already been a lot of attention to improve the characteristics of sliding parts such as bearing, rollers, gear and the like from the viewpoint of reducing noise with sliding, lightening weight and providing no lubrication to a sliding section, in particular where a plastic sliding material is used in an increasingly severe environment, for example, under higher bearing pressures and higher use temperatures.

Particularly, sliding elements of chain tensioners, such as chain guides and chain tensioners, used in an internal combustion engine of an automotive vehicle are required to have good sliding characteristics, good heat resistance at a temperature of not lower than 140°C and a good oil resistance, good fatigue and good impact properties.

Because of a good performance in heat resistance, oil resistance, mechanical strength and wear resistance, often polyamide polymers are used in the sliding components, at least so for the section of the sliding component engaged in sliding contact with a second element. Also other high temperature polymers, such as fluororesins and PEEK, are used.

To improve the frictional resistance of the polymers in the sliding section during sliding, often a solid lubricant is added, or one type of polymer is modified with another. For example, JP 2002/53761 A1 and US 2007/0149329 A1 describe the modification of polyamides with a fluororesin, such as polytetrafluoroethylene and electron beam radiated modifications thereof. The preparation of the solid lubricant of US 2007/0149329 A1 is laborious and complicated to prepare. PTFE also lower the stiffness and creep performance, which are also important for chain guides and tensioners.

It is also known to add compounds such as molybdenum disulfide, boron nitride, silane nitride or graphite as a solid lubricant. Articles wherein graphite is mentioned as a solid lubricant are, for example, Van Beek, A., 2009, Advanced Engineering Design, Lifetime performance and reliability, ISBN 978-90-810406-1-7, TU Delft, Chapter 8, p. 297 and Bhushan, B. 2002, Introduction to Tribology, ISBN 978-0-471-15893-6, John Wiley & Sons Inc, Chapter 5, p. 267. These publications however, do not provide data about the performance of materials comprising such solid lubricants under oil lubricated conditions.

Addition of such a solid lubricant to polyamides generally reduces the strength and impact resistance of the material. For parts like shoes of a chain guide, a chain tensioner and the like, a good impact and fatigue resistance is an important subject from the viewpoint of reliability of the part. Moreover, it has been found by the present inventors that the friction improvement by the addition of these solid lubricants is limited and other solutions for further improvement are needed.

As a measure to improve the impact resistance of the above resin composition, it is general to add into the resin composition fibres and fillers such as glass fibber or the like, or a soft material such as rubber or the like, as disclosed in JP 2005 89619 A1.However, fibres coming from the resin composition as debris during sliding stay at the surface thereby serving as an abrasive. This results in wear of the resin composition itself. Additionally, the fibres scattered in a system stays in other sliding sections, thereby promoting wear of other parts. When a soft material such as rubber or the like is added, the frictional resistance rises so that the effect obtained by adding the solid lubricant disappears.

It is, therefore, an aim of the present invention to provide a sliding element in particular for use in an oil lubricated sliding system that exhibits improved sliding characteristics. A further aim is to make transport vehicles, and power train drive systems or engine that can be used therein, to be more efficient in its energy consumption.

This aim has been achieved with the sliding element according to the invention, consisting of or comprising a sliding contact section mainly made of a plastic material comprising (a) a matrix polymer and, dispersed therein, (b) graphite platelets comprising platelet particles having a thickness of at most 250 nm.

Herein the sliding contact section is the section of the sliding element intended for engagement or to be engaged in sliding contact with another element, such as a chain.

The effect of the sliding element according to the invention wherein at least the sliding section is made, or mainly so, of a plastic material with graphite platelets comprising platelet particles with such low thickness dispersed in the matrix polymer, is that the coefficient of friction (CoF) measured for the sliding element under lubricated conditions at elevated temperature is not only reduced, but also lower than that of corresponding systems comprising another solid lubricant instead of the thin graphite platelets. More particular, the performance is better than, for example, molybdenum sulphide, regular graphite and PTFE grades that are used as solid lubricant.

With a platelet is herein understood a particle with a large difference between the thickness of the particle on the one hand and the other two dimensions (the length and the width of the particle) on the other. This discrepancy in dimensions for the platelets can be indicated by an aspect ratio (L/T), defined by the ratio of the length (L) of the particle and the thickness (T) of the particles. The aspect ratio for the platelets as used herein is at least 10.

The thickness of the individual platelet particles comprised by the graphite platelets may vary over a wide range, and may be as low as 10 nm and even lower, while some of the platelet particles might have a thickness as high as or even higher than 250 nm, as long as a substantial part of the graphite platelets has a thickness of at most 250 nm. Suitably, the graphite platelets in the composition consist for at least 50 wt.%, preferably at least 75 wt.%, of platelet particles having a thickness of at most 250 nm. The weight % (wt.%) is herein relative to the total weight of the graphite platelets.

Suitably, the graphite platelets consists of platelet particles having a number average thickness of at most 200 nm, preferably at most 150 nm or even at most 100 nm, suitably around 80 nm or below or even around 50 nm or below.

The thickness (T) is the smallest of the three dimensions of the platelet particles. The other two are the length (T) and wideness (W). The thickness (T), the length (L) and the aspect ratio (L/T) of the platelets can be determined by electron microscopy. The length of the platelet particles, as measured by is electron microscopy is herein understood to be the distance calculated for the two most extreme points of a platelet particle as visible on an electron microscopy picture. For sake of clarity it is noted that the length of the platelet particles as determined by electron microscopy does not need to be the largest dimension of the particles, since electron microscopy only gives a two dimensional picture. It is further noted that the platelet particles do not need to have a flat structure. Due to the very low thickness these might be bended, curved or waved or deformed otherwise as well.

The platelet particles may also have a length (L), varying over a wide range. The length may be, for example, from around 1 µm or even smaller, to around 50 µm and even larger. Preferably, the platelets have a number average length of at least 5 µm, for example at least 10 µm, more particularly at least 20 µm.

The graphite platelets, due to the small thickness and large length, will typically have a large aspect ratio (L/T). The number average aspect ratio may be well over 25, for example at least 50, or even at least 100.

The values as reported here are determined by electron microscopy pictures of a sample of the material, wherein the number average is calculated for 25 particles from a representative selection of the picture. The number average aspect ratio is determined from the average of the aspect ratio of the individual particles.

Graphites consisting of platelets with a low thickness are, for example, graphite grades obtainable form natural graphite by different kinds of expansion processes, which grades therefore are often referred to as expanded graphite.

In a preferred embodiment for the sliding element according to invention, the graphite used for the preparation of the plastic composition is an expanded graphite having a BET specific surface area, determined by the method according to ASTM D3037, of at least 10 m2/g and a particle size distribution characterized by a D50 (v, 0.5) of at least 50 µm as determined by laser diffraction, in line with ISO 8486 (ed. 1996).

Suitable expanded graphites with such properties are, for example, Timrex BNB 90 from TIMCAL Graphite & Carbon, Switzerland, and Ecophit 350 and 1200 from SGL Carbon GmbH, Germany.

In the sliding element according to the invention, the graphite platelets (component (b)) can be present in an amount varying over a wide range, while still providing an improvement in the CoF. Suitably, the graphite platelets are present in an amount of 0.1 - 20 wt.%. Preferably the graphite platelets are present in an amount of 0.5 - 15 wt.%, relative tot the total weight of the plastic material. Examples of suitable amounts are about 1 wt.%, about 2 wt.%, about 4 wt.%, about 6 wt.%, about 8 wt.% and about 10 wt.%. Herein, the weight percentage (wt.%) is relative tot the total weight of the plastic material.

For the matrix polymer (component (a)) used in the sliding element according to the invention in principle any polymer suitable for use in sliding elements can be used. For example, the matrix polymer may comprise a thermoplastic polymer selected from the group of polymers consisting of polyamides, polyesters, polyarylene sulfides (PPS), polyarylene oxides (PPO), polyimides, polyether ketones, polyetherether ketones (PEEK), polyetherimides (PEI), and polyoxymethylene (POM), and any copolymers thereof. Polyamide imides (PAI) constitute an example of such copolymers. The matrix polymer may suitably comprise a mixture of two or more of said polymers. Preferably, the matrix polymer comprises a polyamide and/or a PEEK, more preferably a polyamide. Examples of suitable thermoplastic polyamides are semicrystalline polyamides like polyamide 6, polyamide 6,6, polyamide 4,10, polyamide 4,8 and polyamide 4,6, and copolyamides thereof.

Alternatively, the matrix polymer may comprise a thermoset polymer. For example the thermoset polymer can be a thermoset polyester resin or a thermoset epoxy resin, or a combination thereof. A thermoset polyester resin can be made for example from a thermosetting unsaturated polyester resin.

In combination with these thermoplastic and thermoset polymers mentioned above, the matrix polymer may comprise other polymeric components which can be blended or dispersed in the polymers mentioned above. Examples of such additional polymeric components are rubbers and elastomers, as well as fluororesins. Rubbers and elastomers can be used for example to improve the impact properties. Fluororesins may be used, for example, as an additional solid lubricant. Such additional polymeric components, which can be blended or dispersed in these thermoplastic or thermoset polymers are typically used in a restricted amount such that the modulus, more particular the high temperature modulus of the thermoplastic or thermoset polymers is not effected or only in limited extent. Suitably the amount is limited to a range of, for example, 0.01 - 20 wt.%. Practically, if used at all, the amount is limited to a range of 1 - 15 wt.%, or even 2 - 10 wt.%. In a particular embodiment, as fluororesin PTFE is used, and which can be present in an amount of, for example, 1-20 wt.%, preferably 5-15 wt.%. Herein the wt.% of the other polymeric components are relative to the total weight of the matrix polymer, which includes any and all thermoplastic or thermoset polymer and additional polymeric components comprised by the plastic material.

In a preferred embodiment embodiment of the invention, the matrix polymer consists of 80 - 100 wt.% of a thermoplastic polyamide and/or a polyetheretherketone and 0- 20 wt.% of another polymer, wherein the wt.% are relative to the total weight of the matrix polymer,

The plastic material, of which the sliding contact section in the sliding element according to the invention is mainly made, respectively preferably consists, may comprise next to the matrix polymer and the graphite platelets, other components

Suitably the plastic material comprises at least one other component, selected from inorganic fillers, fibrous reinforcing agents and other additives.

For the inorganic fillers and/or fibrous reinforcing agents any inorganic material that improves the mechanical properties, such as tensile strength and modulus, may be used. Since many of these materials can have a negative effect on the wear properties of the plastic material, the amount thereof, if used at all, should preferably be kept limited. Examples of fibrous reinforcing agents are glass fibres and carbon fibres. Of these carbon fibres are preferred, as these might sometimes even improve the low friction properties.

Suitably the total amount of inorganic fillers and fibrous reinforcing agents in the composition is in a range of, example, 0.01 - 20 wt.%. Preferably, the amount is the range of 1 - 15 wt.%, or more particularly 2 - 10 wt.%. Herein the wt.% are relative to the total weight of the polymer composition.

In a preferred embodiment, the inorganic filler is a granular or particulate solid inorganic lubricant. The solid inorganic lubricant suitably comprise a material chosen from the group consisting of molybdenum disulfide, natural or synthetic graphite, boron nitride and silane nitride, and any mixtures thereof. With the term natural or synthetic graphite herein understood that the graphite is different from the graphite platelets used as the main solid lubricant in the present invention. Suitably the natural or synthetic graphite has spherical, semi-spherical or globular shaped particles or even flake like particles with an aspect ratio (L/T) of less than 10. The thickness of such natural or synthetic graphite is generally far above 250 nm, although these might comprise smaller particles, though typically with an aspect ratio (L/T) well below 10. The solid inorganic lubricant particles can be present in an amount in the range of, for example, 0.01 - 10 wt.%, although higher amounts may also be used. Preferably, if such solid lubricants are used at all, the amount is limited to a range of 0.1 - 7.5 wt.%, or even 1 - 5 wt.%.

The composition may also comprise other additives. These additives may be chosen from auxiliary additives, generally used in plastic materials for gliding elements. Such other additives are typically used in restricted amounts, for example in the range of 0.01 - 10 wt.%. Suitably, if used at all, the amount is limited to a range of 0.1 - 7.5 wt.%, or even 1 - 5 wt.%.

It is noted that the weight percentages (wt.% ) referred to here above for the inorganic fillers, fibrous reinforcing agents and other additives, unless specified otherwise, are all relative to the total weight of the plastic material.

In a preferred embodiment, the plastic material consists of (a) the matrix polymer (a) 0.1 - 20 wt.% of the graphite platelets; (c) 0 - 20 wt.% of inorganic fillers and/or reinforcing fibres, and/or (d) 0 - 10 wt.% of other additives, wherein the wt.% of (b), (c) and (d) are relative tot the total weight of the plastic material.

The sliding contact section in the sliding element according to the invention is the section of the sliding element being engaged in sliding contact with or intended for engagement in sliding contact with a chain, or another second element that can move in a sliding movement relative to the sliding element, and for which reason the sliding contact section has to have low friction characteristics.

The sliding element typically has a main body which is intended for supporting the sliding contact section and optionally reinforcing the sliding contact section and providing stiffness and rigidity to the sliding element as a whole. The main body will generally also have a portion by which the main body can be fixed to a base. The said fixing portion may comprise for example a bushing, by which the main body can be rotatably attached to a metal pin inserted through the bushing, the pin being fixed to a base.

The sliding contact section and the main body may be made of one and the same material, however, since the sliding contact section has as a main requirement low friction characteristics, whereas the main body has to provide mechanical strength, stiffness and rigidity, properties which are difficult to combine without compromising one property for another, the sliding contact section and the main body are suitably made of different materials.

Suitably, the sliding contact section and the main body are made from different materials. Fort example, the main body is made of a plastic material or a metal, preferably a plastic material, more preferably a fibre reinforced plastic material.

In case the sliding contact section and main body are made from different materials, the sliding contact section and the main body can be combined into an integral sliding element by known means.

For example, the sliding contact section constitutes a surface layer on the main body. The sliding element can be overmoulded over the main body and being mechanically interlocked with the main body.

If the main body is made from a second plastic material, a part or all of a joint portion between the sliding contact section and the reinforcement main body can be joined by melting, e.g. vibration welding. In another alternatively, the plastic material for the sliding contact section and second plastic material are moulded integrally together by a bi-component injection process, also known as 2K moulding or 2-component moulding, so that once they have set they are fixed together. The material which forms the body is injected into the mould first, followed immediately afterwards by the plastic material forming a coating or surface layer.

Preferably, where the main body is made of a second plastic material the sliding contact section is integrally moulded with the main body.

In an alternatively embodiment, which can be used for a chain guide, as well as a chain tensioner, the sliding contact section can be comprised by a sliding blade mechanically interlocked with the main body. Interlocking to the main body may be accomplished, for example, by the sliding blade having ends inserted into grooves formed in opposite ends of the main body. The sliding blade may fully consist of the plastic material from which the sliding contact section is made, or may comprise a base part made of a second material, different from the plastic material, while the sliding contact section constitutes a surface layer on the base part. In case the sliding contact section and bas part are made from different materials, the sliding contact section and the base part can be combined into an integral sliding blade by the same methods described above for the sliding contact section and main body.

The base part, if made from a different material, is preferably made of a plastic material, more preferably a fibre reinforced plastic material. Where the base part is made of a second plastic material, the sliding contact section is preferably integrally moulded with the base part.

The sliding element according to the invention suitably is a chain guide or a chain tensioner. The sliding element according to the invention can also be a gear or a part of a bearing.

The invention also relates to an engine comprising a first element comprising a section engaged in sliding contact with a second element. The section engaged in sliding contact with a second element is herein referred to as sliding contact section. Herein the first element is a sliding element, wherein at least the sliding contact section is made, or at least mainly so, of a plastic material comprising a matrix polymer and graphite platelets comprising platelet particles having a thickness of at most 250 nm dispersed in said matrix polymer, or any preferred embodiment thereof as described herein above. Suitably, the first element, i.e. the sliding element is a gear or a part of bearing.

The invention also relates to a chain transmission apparatus, comprising a chain and a sliding element comprising a sliding contact section engaged in sliding contact with the chain and wherein the sliding contact section is made of, or at least mainly so, of a plastic material comprising a matrix polymer and graphite platelets comprising platelet particles having a layer thickness of at most 250 nm dispersed in said matrix polymer, or any preferred embodiment thereof as described herein above. The sliding element in the chain transmission apparatus suitably is a chain guide or a chain tensioner. The chain transmission apparatus suitably is a chain driven timing system. In a preferred embodiment, the chain transmission apparatus is an oil lubricated sliding system.

The plastic material comprised by the said sliding element n the engine, as well as in the chain transmission apparatus, suitably is any of the said plastic materials comprising the graphite platelets dispersed in said matrix polymer and any preferred embodiment thereof as described herein above. Also the sliding element suitably is a sliding element according to the present invention and any preferred or alternative embodiment thereof as described herein above. For example, the sliding element suitably comprises a main body, reinforcing and supporting the sliding contact section, made of a different material.

The invention is further illustrated with the following examples and comparative experiments.

### Materials

The following materials were used
- PA46: Polyamide 46 polymer (ex DSM, The Netherlands): Mw = 48000, viscosity number (1 wt.% in formic acid, 23°C) = 215; Tmelt = 295°C.
- EG-1: Ecophit GFG 350, expanded graphite with a D50 of 315 - 385 µm (ex SGL Carbon GmbH, Germany).
- EG-2: Ecophit GFG 1200 expanded graphite with a D50 of 1000 - 1400 µm, BET about 25 m2/g (ex SGL Carbon GmbH, Germany).
- Graphite: TIMREX SFG150, a regular graphite from Timcal Graphite & Carbon, Switserland
- MoS2: RM70E MoS2 masterbatch, 70 wt.% inside PA6; Producer: Polyvel Inc.
- PTFE: Dyneon PA5953, PTFE with average particle size 8 µm (ex Dyneon GmbH, Germany)

### Methods

### Compounding

Plastic compositions were prepared from polyamide-46 and various fillers in a Berstorff ZE25-48D co-rotating twin screw extruder. The temperature settings of the extruder were such that the melt temperature at the exit of the extruder was typically 320°C. The compositions are listed in Table 1.

### Injection moulding

The polyamide compositions reported herein below used for making injection moulded test parts were pre-dried prior to use, by applying the following conditions: the compositions were heated under vacuum of 0.02 MPa to 80°C and kept at that temperature and pressure for 24 hrs while a stream of nitrogen was passed. The pre-dried materials were injection moulded on an injection moulding machine using a mould with a cavity providing for the cup used in the friction test. The temperature of the cylinder wall was set at 315 °C, i.e. 30°C above the melting temperature of the polyamide, and the temperature of the mould was set at 140°C. The cups so obtained were cooled and stored under dry conditions at room temperature prior to use for the friction tests.

### Plastic cups used in the friction test

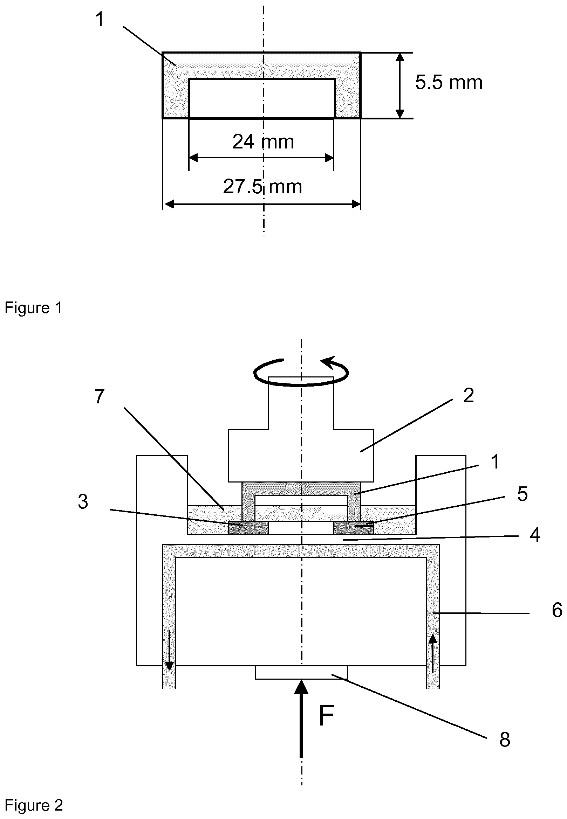

The friction test was done with a cylindrically symmetrical plastic cup as shown in Figure 1, using a set-up as shown in Fig. 2.

### Figures

Fig. 1: cross sectional view of a cylindrically symmetrical plastic cup as used in the friction test.
Fig. 2: Schematic view of the friction test set-up.

Fig. 1 shows a cross section through the central axis of a cylindrically symmetrical plastic cup (1) as used in the friction test. The cup has an inner diameter of 24 mm, an outer diameter of 27.5 mm, and a height of 5 mm, as indicated in Figure 1. The cup has a mean radius of (27.5 + 24)/4 = 12.875 mm.

The cups used in the friction test were injection moulded from the respective plastic materials as described above.

### Friction test

The friction test set-up is shown in Fig. 2. The plastic cup (1) is installed in an upper specimen holder (2) of the testing machine (not shown). An SKF WS 81104 shaft washer (3), which is used as the steel counter surface, is mounted on a lower specimen holder (4). The washer has an inner diameter of 20 mm, an outer diameter of 35 mm, and a height of 2.75 mm. It has a hardness of 60 on the Rockwell-C scale (60 HRc) and an average surface roughness (Ra) of 2 µm. A hole (5) is machined 0.5 mm below the contact surface to mount a thermo-couple for temperature logging. Heating oil (Shell Helix Super Mineral Motor Oil 15W-40; is circulated through a channel (6). The washer was provided with a thermocouple, positioned 0.5 mm underneath the contact surface between the washer and the cup. The oil (6) is used to keep the contact temperature, as measured by the thermocouple, at 140°C. The washer and the lower part of the cup are submerged in a testing oil (7) Castrol Magnatec Professional A1 5W-30).

Contact normal pressure is applied by a force F on the lower specimen holder (4). The nominal contact pressure was 1 MPa. The upper specimen holder (2) rotates at an angular velocity of 742 rpm corresponding with a sliding velocity of 1m/s at the contact surface. This sliding velocity is the sliding velocity calculated for the centre of the cup wall, which also corresponds with the average sliding velocity calculated over the wall thickness. The friction torque T is measured by a load cell (8). The coefficient of friction was calculated from the ratio T/(R*F), wherein T is the measured couple resulting from the friction, F is the normal force on the cup and R is the mean radius of the cup. The test results are shown in Table 1.

**Table 1. Compositions and test results for Examples I-IV and Comparative Experiments A-F.**

| Experiment | Filler | Amount (wt.%) | COF at 1 MPa |
|---|---|---|---|
| Example I | EG-1 | 10 | 0,062 |
| Example II | EG-1 | 5 | 0,057 |
| Example III | EG-1 | 2 | 0,038 |
| Example IV | EG-2 | 5 | 0,068 |
| Com. Exp. A | - | 0 | 0,100 |
| Com. Exp. B | Graphite | 5 | 0,110 |
| Com. Exp. C | MoS2 | 1 | 0,090 |
| Com. Exp. D | MoS2 | 2 | 0,090 |
| Com. Exp. E | PTFE | 12.5 | 0,090 |

As can be seen from these results, the Examples according to the invention show a significant reduction in the coefficient of friction compared to a non-filled material. This in contrast to the other solid lubricants used at similar concentrations, which all gave values for the coefficient of friction comparable to that of the non-filled material.

## Claims

1. Sliding element for use in a chain transmission apparatus, wherein the sliding element is a chain guide or a chain tensioner, comprising a sliding contact section for engagement in sliding contact with a chain, wherein the sliding contact section is mainly made of a plastic material comprising a matrix polymer A, **characterized in that** graphite platelets B, comprising platelet particles having a thickness of at most 250 nm , are dispersed in the matrix polymer.

2. Sliding element according to claim 1, wherein the graphite platelets consist of platelet particles having a number average thickness of at most 200 nm and/or a number average length of at least 5 µm.

3. Sliding element according to claim 1 or 2, wherein for the preparation of the plastic material an expanded graphite having a BET specific surface area, determined by the method according to ASTM D3037, of at least 10 m2/g and a particle size distribution **characterized by** a D50 of at least 50 µm as determined by laser diffraction has been used.

4. Sliding element according to any of claims 1-3, wherein the graphite platelets B are present in a total amount of 0.10 - 20 wt.%, preferably 0.5 - 15 wt.%, relative to the total weight of the plastic material.

5. Sliding element according to any of claims 1-4, wherein the matrix polymer comprises a thermoplastic polymer selected from the group of polymers consisting of polyamides, polyesters, polyarylene sulfides , polyarylene oxides, polyimides, polyetherketones, polyetheretherketones, polyoxymethylenes and polyetherimides, and any copolymers thereof.

6. Sliding element according to any of claims 1-5, wherein the plastic material comprises, next to the matrix polymer A and the graphite platelets B, 0 - 20 wt.% of inorganic fillers and/or reinforcing fibres C, and/or 0 - 10 wt.% of other additives D, wherein the wt.% of C and D are relative to the total weight of the plastic material.

7. Sliding element according to any of claims 1-6, comprising a main body supporting the sliding contact section, made of a second material different from the plastic material.

8. Sliding element according to claim 7, wherein the sliding contact section constitutes a surface layer on the main body or on a base part of a sliding blade mechanically interlocked with the main body.

9. Engine comprising a first element comprising a sliding contact section engaged in sliding contact with a second element, wherein at least the sliding contact section is made of a plastic material comprising a matrix polymer and wherein the first element is a chain guide or a chain tensioner, **characterized in that** graphite platelets comprising platelet particles having a thickness of at most 250 nm, are dispersed in said matrix

10. Engine according to claim 9, wherein the first element is a sliding element according to any of claims 1 - 6.

11. Chain transmission apparatus comprising a chain and a sliding element, wherein the sliding element is a chain guide or a chain tensioner, the sliding element comprising a sliding contact section engaged in sliding contact with the chain and a main body reinforcing and supporting the sliding contact section, wherein the sliding contact section consists of a plastic material comprising a matrix polymer, **characterized in that** graphite platelets, comprising platelet particles having a layer thickness of at most 250 nm, are dispersed in the matrix polymer.

12. Chain transmission apparatus according to claim 11, wherein the sliding element is a sliding element according to any of claims 1-8 and the chain transmission apparatus is an oil lubricated sliding system.

## Patentansprüche

1. Gleitelement zur Verwendung in einer Kettenantriebsvorrichtung, wobei das Gleitelement eine Kettenführung oder ein Kettenspanner ist, das einen Gleitkontaktabschnitt zum Gleitkontakteingriff mit einer Kette umfasst, wobei der Gleitkontaktabschnitt hauptsächlich aus einem Kunststoff mit einem Matrixpolymer A gefertigt ist, **dadurch gekennzeichnet, dass** Graphitplättchen B, die Plättchenpartikel mit einer Dicke von höchstens 250 nm aufweisen, fein in dem Matrixpolymer verteilt sind.

2. Gleitelement nach Anspruch 1, wobei die Graphitplättchen aus Plättchenpartikeln mit einer zahlengemittelten Dicke von höchstens 200 nm und/oder einer zahlengemittelten Länge von mindestens 5 µm bestehen.

3. Gleitelement nach Anspruch 1 oder 2, wobei zur Herstellung des Kunststoffs ein Blähgraphit mit einer mit dem Verfahren nach ASTM D3037 ermittelten spezifischen BET-Oberfläche von mindestens 10 m²/g und einer Partikelgrößenverteilung verwendet worden ist, die durch einen mittels Laserbeugung ermittelten D50 von wenigstens 50 µm gekennzeichnet ist.

4. Gleitelement nach einem der Ansprüche 1 bis 3, wobei die Graphitplättchen B in einer Gesamtmenge von 0,10 bis 20 Gewichts-%, vorzugsweise 0,5 bis 15 Gewichts-%, bezogen auf das Gesamtgewicht des Kunststoffs vorhanden sind.

5. Gleitelement nach einem der Ansprüche 1 bis 4, wobei das Matrixpolymer ein thermoplastisches Polymer umfasst, das aus der Gruppe von Polymeren ausgewählt ist, die aus Polyamiden, Polyestern, Polyarylensulfiden, Polyarylenoxiden, Polyimiden, Polyetherketonen, Polyetheretherketonen, Polyoxymethylenen und Polyetherimiden sowie beliebigen Copolymeren daraus besteht.

6. Gleitelement nach einem der Ansprüche 1 bis 5, wobei der Kunststoff, abgesehen von dem Matrixpolymer A und den Graphitplättchen B, 0 bis 20 Gewichts-% anorganische Füllstoffe und/oder Verstärkungsfasern C und/oder 0 bis 10 Gewichts-% weiterer Zusatzstoffe D umfasst, wobei die Gewichts-% von C und D auf das Gesamtgewicht des Kunststoffs bezogen sind.

7. Gleitelement nach einem der Ansprüche 1 bis 6, das einen den Gleitkontaktabschnitt tragenden Hauptkörper umfasst, der aus einem zweiten Material gefertigt ist, das sich von dem Kunststoff unterscheidet.

8. Gleitelement nach Anspruch 7, wobei der Gleitkontaktabschnitt eine Oberflächenschicht auf dem Hauptkörper oder auf einem Grundteil einer Gleitschiene bildet, die mechanisch mit dem Hauptkörper verbunden ist.

9. Motor, der ein erstes Element mit einem Gleitkontaktabschnitt umfasst, der im Gleitkontakteingriff mit einem zweiten Element steht, wobei zumindest der Gleitkontaktabschnitt aus einem Kunststoff mit einem Matrixpolymer gefertigt ist, und wobei das erste Element eine Kettenführung oder ein Kettenspanner ist, **dadurch gekennzeichnet, dass** Graphitplättchen, die Plättchenpartikel mit einer Dicke von höchstens 250 nm aufweisen, fein in der Matrix verteilt sind.

10. Motor nach Anspruch 9, wobei das erste Element ein Gleitelement nach einem der Ansprüche 1 bis 6 ist.

11. Kettenantriebsvorrichtung, die eine Kette und ein Gleitelement umfasst, wobei das Gleitelement eine Kettenführung oder ein Kettenspanner ist, wobei das Gleitelement Folgendes umfasst:
einen Gleitkontaktabschnitt, der mit der Kette in Gleitkontakt steht, und
einen Hauptkörper, der den Gleitkontaktabschnitt verstärkt und trägt, wobei der Gleitkontaktabschnitt aus einem Kunststoff mit einem Matrixpolymer besteht, **dadurch gekennzeichnet, dass** Graphitplättchen, die Plättchenpartikel mit einer Schichtdicke von höchstens 250 nm aufweisen, fein in dem Matrixpolymer verteilt sind.

12. Kettenantriebsvorrichtung nach Anspruch 11, wobei das Gleitelement ein Gleitelement nach einem der Ansprüche 1 bis 8 ist und die Kettenantriebsvorrichtung ein ölgeschmiertes Gleitsystem ist.

## Revendications

1. Élément coulissant destiné à être utilisé dans un appareil de transmission par chaîne, l'élément coulissant étant un guide-chaîne ou un tendeur de chaîne, comprenant une section de contact coulissant pour la coopération en contact coulissant avec une chaîne, dans lequel la section de contact coulissant est principalement constituée d'une matière plastique comprenant un polymère de matrice A, **caractérisé en ce que** des lamelles de graphite B, comprenant des particules lamellaires ayant une épaisseur d'au maximum 250 nm, sont dispersées dans le polymère de matrice.

2. Élément coulissant selon la revendication 1, dans lequel les lamelles de graphite sont constituées de particules lamellaires ayant une épaisseur moyenne en nombre d'au maximum 200 nm et/ou une longueur moyenne en nombre d'au moins 5 µm.

3. Élément coulissant selon la revendication 1 ou 2, dans lequel pour la préparation de la matière plastique un graphite expansé ayant une surface spécifique BET, déterminée par la méthode selon la norme ASTM D3037, d'au moins 10 m²/g et une distribution de la taille des particules telle que déterminée par diffraction laser **caractérisée par** un D50 d'au moins 50 µm a été utilisé.

4. Élément coulissant selon l'une quelconque des revendications 1-3, dans lequel les lamelles de graphite B sont présentes en une quantité totale de 0,10-20 % en poids, de préférence de 0,5-15 % en poids, par rapport au poids total de la matière plastique.

5. Élément coulissant selon l'une quelconque des revendications 1-4, dans lequel le polymère de matrice comprend un polymère thermoplastique choisi dans le groupe de polymères constitué par les polyamides, les polyesters, les poly(sulfures d'arylène), les poly(oxydes d'arylène), les polyimides, les polyéthercétones, les polyétheréthercétones, les polyoxyméthylènes et les polyétherimides, et de quelconques copolymères de ceux-ci.

6. Élément coulissant selon l'une quelconque des revendications 1-5, dans lequel la matière plastique comprend, à côté du polymère de matrice A et des lamelles de graphite B, 0-20 % en poids de charges inorganiques et/ou de fibres renforçantes C et/ou 0-10 % en poids d'autres additifs D, les % en poids de C et de D étant par rapport au poids total de la matière plastique.

7. Élément coulissant selon l'une quelconque des revendications 1-6, comprenant un corps principal supportant la section de contact coulissant, constitué d'un second matériau différent de la matière plastique.

8. Élément coulissant selon la revendication 7, dans lequel la section de contact coulissant constitue une couche de surface sur le corps principal ou sur une partie de base d'une palette coulissante mécaniquement imbriquée avec le corps principal.

9. Moteur comprenant un premier élément comprenant une section de contact coulissant coopérant en contact coulissant avec un second élément, dans lequel au moins la section de contact coulissant est constituée d'une matière plastique comprenant un polymère de matrice et dans lequel le premier élément est un guide-chaîne ou un tendeur de chaîne, **caractérisé en ce que** des lamelles de graphite comprenant des particules lamellaires ayant une épaisseur d'au maximum 250 nm, sont dispersées dans ladite matrice.

10. Moteur selon la revendication 9, dans lequel le premier élément est un élément coulissant selon l'une quelconque des revendications 1-6.

11. Appareil de transmission par chaîne comprenant une chaîne et un élément coulissant, dans lequel l'élément coulissant est un guide-chaîne ou un tendeur de chaîne, l'élément coulissant comprenant une section de contact coulissant coopérant en contact coulissant avec la chaîne et un corps principal renforçant et supportant la section de contact coulissant, dans lequel la section de contact coulissant est constituée d'une matière plastique comprenant un polymère de matrice, **caractérisé en ce que** des lamelles de graphite comprenant des particules lamellaires ayant une épaisseur de couche d'au maximum 250 nm, sont dispersées dans le polymère de matrice.

12. Appareil de transmission par chaîne selon la revendication 11, dans lequel l'élément coulissant est un élément coulissant selon l'une quelconque des revendications 1-8 et l'appareil de transmission par chaîne est un système coulissant lubrifié à l'huile.
